# EUROPÄISCHE PATENTSCHRIFT

(11) **EP 2 504 180 B1**
(45) Veröffentlichungstag und Bekanntmachung des Hinweises auf die Patenterteilung: **07.03.2018**
(21) Anmeldenummer: 10759903.7
(22) Anmeldetag: 30.09.2010
(51) Int. Cl.: B60C 11/12, B60C 11/16, B60C 11/03, B60C 11/11

(54) **FAHRZEUGLUFTREIFEN**
PNEUMATIC TIRE
PNEU

(30) Priorität: 23.11.2009 DE 102009044620
(43) Veröffentlichungstag der Anmeldung: 03.10.2012
(73) Patentinhaber: Continental Reifen Deutschland GmbH, 30165 Hannover (DE)
(72) Erfinder: DIENSTHUBER, Franz, 30559 Hannover (DE)
(74) Vertreter: Finger, Karsten
(86) Internationale Anmeldenummer: PCT/EP2010/064519
(87) Internationale Veröffentlichungsnummer: WO 2011/060990

(56) Entgegenhaltungen:
- EP-A1- 1 580 034
- EP-A2- 0 968 847
- JP-A- 2008 024 213

## Beschreibung

Die Erfindung betrifft einen Fahrzeugluftreifen, insbesondere für den Einsatz unter winterlichen Fahrbedingungen, mit einem Laufstreifen, welcher durch Rillen, Nuten und dergleichen in Profilblöcke gegliedert ist, wobei Profilblöcke vorgesehen sind, welche jeweils mit zumindest drei, sich im Wesentlichen in übereinstimmender Richtung erstreckenden, jeweils unter einem Winkel von höchsten 45° zur Laufstreifenquerrichtung verlaufenden Einschnitten versehen sind, wobei der Laufstreifen Profilblöcke aufweist, deren Einschnitte mit der Laufstreifenquerrichtung unterschiedlich große Winkel einschließen, welche, beginnend bei einem der beiden in Umfangsrichtung des Profilblocks äußersten Einschnitte, von Einschnitt zu Einschnitt schrittweise größer oder kleiner sind.

Ein Fahrzeugluftreifen der eingangs genannten Art ist beispielsweise aus der EP-A-0 968 847 bekannt. Der Laufstreifen dieses Fahrzeugluftreifens weist Profilblöcke auf, die von einem bienenwabenförmig ausgestalteten Einschnittnetz überzogen sind. Bestandteile dieses Netzes sind auch Einschnitte, welche mit der Laufstreifenquerrichtung unterschiedlich große Winkel einschließen, derart, dass, beginnend bei einem der beiden in Umfangsrichtung des Profilblocks äußersten Einschnitte, diese Winkel von Einschnitt zu Einschnitt schrittweise größer oder kleiner sind. Aus der EP-A-1 580 034 ist ein Fahrzeugluftreifen mit einem Laufstreifen mit Profilblöcken bekannt, in welchen die Einschnitte strahlenförmig zu den Profilblockkanten verlaufen. Auch diese Einschnitte schließen daher mit der Laufstreifenquerrichtung unterschiedlich große Winkel ein.

Es ist bekannt und üblich, Fahrzeugluftreifen, die für den Einsatz unter winterlichen Fahrbedingungen vorgesehen sind, mit Profilblöcken im Laufstreifen zu versehen, die jeweils eine Anzahl von Einschnitten mit einer Breite zwischen 0,4 mm und 0,6 mm aufweisen. Diese Einschnitte können auf unterschiedliche Weise ausgeführt sein, beispielsweise ist es üblich, in Draufsicht wellen- oder zick-zack-förmige verlaufende Einschnitte oder Einschnitte mit zick-zack- oder wellenförmigen Abschnitte vorzusehen. Zick-zick- oder wellenförmig verlaufende Abschnitte können beispielsweise mit in Draufsicht geradlinig verlaufenden Abschnitten kombiniert sein, welche meist jene sind, die in Nuten münden. Es ist ferner bekannt, dass Einschnitte die Quersteifigkeit und die Umfangssteifigkeit des Profilblockes beeinflussen, wobei zu den diesbezüglichen Einflussfaktoren der Neigungswinkel der Einschnitte relativ zur Reifenquerrichtung und die Ausführung der Einschnitte von Bedeutung sind.

In einigen Ländern ist es zulässig, den Laufstreifen von Winterreifen mit Spikes zu versehen, wobei gemäß gesetzlichen Bestimmungen das mittlere Drittel der Aufstandfläche des Luftstreifens frei von Spikes bleiben muss. Die bespikten Profilblöcke unterliegen beim Betrieb des Reifens in Folge ihrer reduzierten Gleit- und Schlupfbewegungen einem geringeren Abrieb, sodass die spikefreie Mittelpartie des Laufstreifens diesen gegenüber verstärkt abreibt. Der verstärkte Abrieb im mittleren Bereich des Laufstreifens kann bekannterweise durch eine Erhöhung des Positivanteils in diesem Bereich, beispielsweise durch das Vorsehen schmälerer Nuten, kompensiert werden. Sind daher als Folge der schmalen Nuten Profilblöcke im Zentralbereich des Laufstreifens in Umfangsrichtung vergleichsweise lang erhöht sich entsprechend ihre Umfangssteifigkeit. Die höhere Steifigkeit dieser Profilblöcke in Umfangsrichtung wirkt jedoch dem ursprünglich gewollten Effekt, durch einen größeren Positivanteil den Profilabrieb im Mittelbereich zu reduzieren, entgegen.

Der Erfindung liegt die Aufgabe zugrunde, bei einem Reifen der eingangs genannten Art die Umfangssteifigkeit von Profilblöcken mit Einschnitten durch eine einfache Maßnahme verringern oder erhöhen zu können und damit gezielt zu beeinflussen.

Gelöst wird die gestellte Aufgabe erfindungsgemäß dadurch, dass die Winkel von Einschnitt zu Einschnitt um 1° bis 1,5° größer oder kleiner sind.

Durch diese einfache Maßnahme lässt sich die Umfangssteifigkeit eines Profilblockes gezielt beeinflussen. Das Ausmaß der Änderung der Winkelung der Einschnitte sowie die tatsächliche Größe der Winkel bestimmen die Richtung der Wirkung auf die Umfangssteifigkeit.

Besonders vorteilhaft sind Winkeländerungen in der angegebenen Größenordnung von 1° bis 1,5°. Selbst bei einer größeren Anzahl von Einschnitten bleiben dadurch die für einen Winterreifen wesentlichen sonstigen Eigenschaften des Laufstreifenprofils, wie Traktions- und Bremsverhalten auf Eis und Schnee, optimal erhalten.

In diesem Zusammenhang ist es auch günstig, wenn der größte Winkel höchstens 30°, insbesondere höchstens 25°, beträgt.

Bei in Umfangsrichtung längeren Profilblöcken kann die Anzahl der Einschnitte, welche mit der Laufstreifenquerrichtung unterschiedlich große Winkel einschließen, pro Profilblock ohne weiteres bis zu sieben betragen, da schon kleine Winkeländerungen den erwünschten Effekt bewirken.

Von besonderem Vorteil ist die Erfindung bei einem Fahrzeugluftreifen, dessen Laufstreifen mit Spikes versehen ist, wobei das mittlere Drittel der mit dem Untergrund in Kontakt kommenden Fläche des Laufstreifens frei von Spikes ist und jenen Umfangsbereich enthält, in welchem der Positivanteil am größten ist und Profilblöcke mit großer Umfangserstreckung verlaufen . In diesem Fall ist eine Beeinflussung der Umfangssteifigkeit der Profilblöcke im mittleren Bereich des Laufstreifen für eine gleichmäßigen Abrieb vorteilhaft. Es wird daher der Laufstreifen derart gestaltet, dass die Profilblöcke in diesem Umfangsbereich Einschnitte aufweisen, welche erfindungsgemäß mit der Laufstreifenquerrichtung unterschiedlich große Winkel einschließen. Durch die erfindungsgemäße Maßnahme lässt sich die Umfangssteifigkeit der längeren Blöcke verringern und damit der Abrieb vergleichmäßigen.

Weitere Merkmale, Vorteile und Einzelheiten der Erfindung werden nun anhand der Zeichnung, die schematisch ein Ausführungsbeispiel darstellt, näher beschrieben. Dabei zeigt

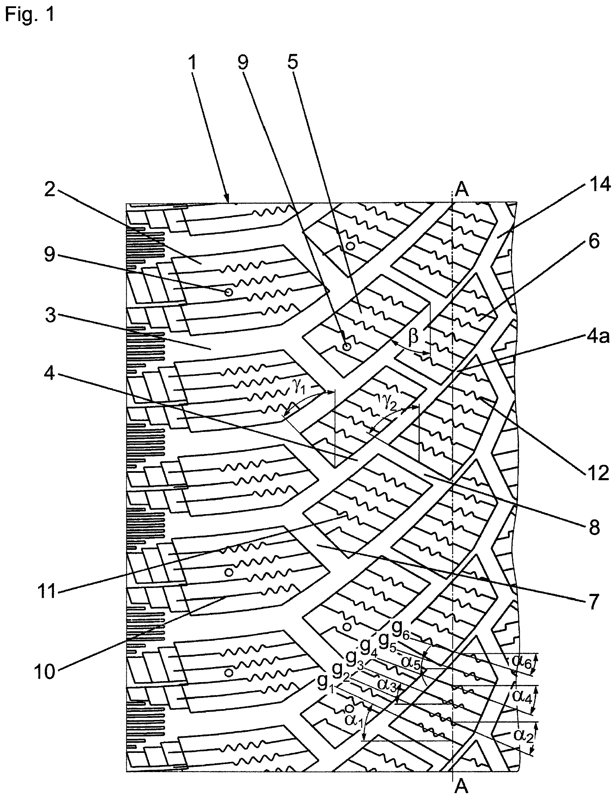

Fig. 1 eine Draufsicht auf einen Laufstreifenprofilabschnitt eines Fahrzeugluftreifens mit einer Ausführungsform der Erfindung.

In Fig. 1 ist mit A-A der Reifenäquator bezeichnet, durch welchen der Laufstreifen des Fahrzeugluftreifens in zwei Hälften geteilt wird. Die dargestellte Ausführungsvariante eines Laufstreifens ist für Fahrzeugluftreifen für Personenkraftwagen und insbesondere für einen Einsatz unter winterlichen Fahrbedingungen vorgesehen.

Die Figur zeigt einen Umfangsabschnitt des Laufstreifens mit einer der beiden Laufstreifenhälften. In der zweiten Laufstreifenhälfte können sich gleichartige, ähnliche oder anders gestaltete Profilstrukturen befinden, beispielsweise kann der Laufstreifen ein sogenanntes asymmetrisches Profil oder ein laufrichtungsgebunden ausgeführtes Profil aufweisen. Zu den in Fig. 1 gezeigten Profilstrukturen gehört eine schulterseitig verlaufende Blockreihe 1, deren Profilblöcke 2 durch Quernuten 3, die im Wesentlichen in Langstreifenquerrichtung verlaufen, von einander getrennt sind. Die Quernuten 3 setzen sich in Richtung Laufstreifenmitte als Schrägrillen 4 fort, welche gegenüber der Umfangsrichtung bzw. dem Reifenäquator A-A unter einem Winkel β von 30° bis 45° verlaufen. Zwischen in Umfangsrichtung benachbarten Schrägrillen 4 sind jeweils zwei Profilblöcke 5, 6 angeordnet. Die etwa im mittleren Bereich der gezeigten Laufstreifenhälfte befindlichen Profilblöcke 5 sind in Draufsicht im Wesentlichen parallelogrammförmig ausgeführt, mit je zwei spitzwinkeligen und je zwei stumpfwinkeligen Ecken. Die Profilblöcke 5 sind von den benachbarten Profilblöcken 2 und den benachbarten Profilblöcken 6 durch weitere Rillen 7, 8 getrennt, welche gegensinnig zu den Schrägrillen 4 unter Winkeln γ₁, γ₂, von etwa 30° bis 50° zu Reifenumfangsrichtung (Reifenäquator A-A) verlaufen. An die im zentralen Bereich des Laufstreifens vorgesehenen Profilblöcke 6 schließt in der zweiten Laufstreifenhälfte eine zick-zack-förmig verlaufende Umfangsnut 14 an, wobei jeder Profilblock 6 von zwei Abschnitten des Zick-Zacks der Nut 14 begrenzt ist und in Draufsicht die Gestalt eines unregelmäßigen Fünfeckes aufweist. Diese Form der Profilblöcke 6 ist lediglich beispielhaft, die Profilblöcke können, je nach der Ausführung der Umfangsnut, auch eine andere Form, beispielsweise eine Trapezform, aufweisen. Die in Umfangsrichtung aufeinander folgenden Profilblöcke 6 sind voneinander jeweils durch einen Abschnitt 4a der Schrägrille 4 getrennt, welcher wesentlich schmäler ausgeführt ist als die sonstigen Schrägrillenbereiche bzw. -abschnitte.

Sämtliche Profilblöcke 2, 5, 6 des in Fig. 1 gezeigten Laufstreifens weisen jeweils eine Anzahl von Einschnitten 10, 11 und 12 auf, deren Breite zwischen 0,4 mm und 0,6 mm beträgt. Die in den schulterseitig verlaufenden Profilblöcken 2 angeordneten Einschnitte 10 verlaufen zueinander und zu den die Quernuten 3 begrenzenden Blockkanten der Profilblöcke 2 parallel und weisen in Draufsicht in Kombination gerade und wellenförmig verlaufende Abschnitte auf. Die wellenförmig verlaufenden Abschnitte befinden sich großteils im mittleren Bereich der Einschnitte 10. Die Anzahl der Einschnitte 10 pro Profilblock 2 wird zwischen zwei und fünf gewählt, je nach der Größe der Umfangserstreckung der Profilblöcke 2. Ihr gegenseitiger Abstand sowie ihr Abstand zu den die Quernuten 2 begrenzenden Profilkanten ist im Wesentlichen gleich groß. Die Einschnitte 11 in den Profilblöcken 5 sind ebenfalls zueinander parallel angeordnet und weisen großteils einen in Draufsicht wellenförmig verlaufenden mittleren Abschnitt und zwei geradlinig verlaufende äußere Abschnitte auf, welche in die Schrägrillen 4 münden. Bei der gezeigten Ausführungsform ist ferner die Orientierung bzw. Erstreckung der Einschnitte 11 an die Erstreckung der Rillen 7 und 8 angepasst, die Einschnitte 11 verlaufen im Wesentlichen parallel zu den Rillen 7 und 8.

Die in den Profilblöcken 6 ausgebildeten Einschnitte 12 setzen sich ebenfalls aus einem in Draufsicht wellenförmigen mittleren Abschnitt und zwei geradlinig verlaufenden seitlichen Abschnitten zusammen. Die Anzahl der Einschnitte 12 pro Profilblock 6 beträgt, je nachdem wie groß die Umfangserstreckung der Profilblöcke 6 ist, mindestens drei, bei der gezeigten Ausführungsform sind sechs Einschnitte 12 pro Profilblock 6 vorgesehen. Bei anders gestalteten Profilblöcken kann die Anzahl der Einschnitte 12 auch größer als sechs sein. Die Einschnitte 12 sind in Laufstreifenquerrichtung orientierte Einschnitte, das heißt, dass sie mit der Laufstreifenquerrichtung Winkel einschließen, die kleiner als 45°, insbesondere kleiner als 30°, sind. Bei der gezeigten Ausführungsvariante orientiert sich der Verlauf der Einschnitte 12 am Verlauf bzw. der Neigung der Rillen 8. Durch jeden Einschnitt 12 lässt sich eine in seiner Erstreckungsrichtung verlaufende Gerade g₁ bis g₆ legen. Innerhalb jedes Profilblockes 6 wird der Winkel α₁ bis α₆, welchen die Geraden g₁ bis g₆ mit der Reifenquerrichtung einschließen, beginnend bei einem der in Umfangsrichtung ersten Einschnitte 12, von Einschnitt 12 zu Einschnitt 12 schrittweise für alle Einschnitte 12 entweder größer oder kleiner. Die Winkeländerung beträgt zwischen 1° und 1,5°. So ist beispielsweise bei der gezeigten Ausführungsvariante der Winkel α₁ der Geraden g₁ des der Rille 8 benachbart verlaufenden Einschnittes 12 jedes Profilblockes 6 zur Querrichtung gemessen etwa 25°, der Winkel α₆ der Geraden g₆ durch den in Umfangsrichtung letzten Einschnitt 12 beträgt 12°. Je nach der Ausführung der Profilstrukturen bzw. der Profilblöcke können die Einschnitte 12 auch derart angeordnet sein, dass ihre Orientierung in den Profilblöcken 6 von jeden der benachbarter Rillen oder Nuten abweicht.

Der gezeigte Laufstreifen ist mit einer Vielzahl von Spikes 9 versehen, welche in der Figur lediglich angedeutet sind, wobei beispielhaft Spikes 9 in einigen Schulterblöcken 2 und in Profilblöcken 5 positioniert sind. Die Anordnung der Spikes 9 im Laufstreifen erfolgt derart, dass zumindest das mittlere Drittel der Aufstandsfläche des Laufstreifen spikefrei bleibt. Diese Maßnahme entspricht den gesetzlichen Anforderungen in einigen europäischen Ländern und wurde aus dem Grund vorgesehen, den Verschleiß des Straßenbelags durch die Verwendung von bespikten Reifen zu reduzieren. In den bespikten Laufstreifenbereichen sind die Gleit- und Schlupfbewegungen der Profilblöcke beim Kontakt des Reifens mit dem Untergrund während des Abrollens reduziert, wohin gegen der spikefreie mittlere bzw. zentrale Bereich des Laufstreifens verstärkt abreibt. Im mittleren bzw. zentralen Bereich des Laufstreifens werden daher die Profilstrukturen derart ausgelegt, dass sie einen höheren Positivanteil aufweisen als die Profilstrukturen in den seitlichen Bereichen des Laufstreifens. Der Positivanteil ist, wie bekannt, der prozentuelle Anteil der mit dem Untergrund in Kontakt kommenden Fläche an der Gesamtfläche eines bestimmten Laufstreifenbereichs. Bei einem hohen Positivanteil ist daher die von den Nuten, Rillen und dergleichen eingenommene Fläche vergleichsweise gering. Beim gegenständlichen Laufstreifen ist, insbesondere durch die schmalen Abschnitte 4a, der Positivanteil hoch, wobei gleichzeitig die Umfangslänge der Profilblöcke 6 relativ groß ist. Die Profilblöcke 6 weisen somit eine höhere Umfangssteifigkeit auf als die in Umfangsrichtung kürzeren Profilblöcke 5. Die höhere Umfangssteifigkeit der Profilblöcke 6 wirkt dem durch den höheren Positivanteil beabsichtigten Effekt - Verringerung des Abriebes - entgegen. Die besondere Anordnung der in den Profilblöcken 6 verlaufenden Einschnitte 12 verringert die Umfangssteifigkeit der Profilblöcke 6, sodass der Vorteil der erhöhten Abriebsfestigkeit durch einen höheren Positivanteil erhalten bleiben kann.

Die Erfindung ist auf das dargestellte Ausführungsbeispiel nicht eingeschränkt. Sämtliche Einschnitte, auch jene, die ihre Winkelung erfindungsgemäß ändern, können in Draufsicht leicht bogenförmig verlaufen. Die Einschnitte können ferner über ihre gesamte Länge linien-, zick-zack oder wellenförmig verlaufen. Die Anzahl der Einschnitte kann variieren, es können auch Profilblöcke mit ein oder zwei Einschnitte vorgesehen sein.

### Bezugszeichenliste

1...............Blockreihe
2...............Profilblock
3...............Quernut
4............... Schrägrille
5............... Profilblock
6...............Profilblock
7...............Rille
8...............Rille
9............... Spike
10.............Einschnitt
11.............Einschnitt
12.............Einschnitt
14............. Umfangsnut
β...............Winkel
γ₁..............Winkel
γ₂..............Winkel
α₁ bis α₆....Winkel

## Patentansprüche

1. Fahrzeugluftreifen, insbesondere für den Einsatz unter winterlichen Fahrbedingungen, mit einem Laufstreifen, welcher durch Rillen (4), Nuten (3, 14) und dergleichen in Profilblöcke (2, 5, 6) gegliedert ist, wobei Profilblöcke (6) vorgesehen sind, welche jeweils mit zumindest drei, sich im Wesentlichen in übereinstimmender Richtung erstreckenden, jeweils unter einem Winkel von höchsten 45° zur Laufstreifenquerrichtung verlaufenden Einschnitten (12) versehen sind, wobei der Laufstreifen Profilblöcke (6) aufweist, deren Einschnitte (12) mit der Laufstreifenquerrichtung unterschiedlich große Winkel (α₁ bis α₆) einschließen, welche, beginnend bei einem der beiden in Umfangsrichtung des Profilblocks (6) äußersten Einschnitte (12), von Einschnitt (12) zu Einschnitt (12) schrittweise größer oder kleiner sind,
**dadurch gekennzeichnet,**
**dass** die Winkel (α₁ bis α₆) von Einschnitt (12) zu Einschnitt (12) um 1° bis 1,5° größer oder kleiner sind.

2. Fahrzeugluftreifen nach Anspruch 1, **dadurch gekennzeichnet, dass** der größte Winkel (α₁) höchstens 30°, insbesondere höchstens 25°, beträgt.

3. Fahrzeugluftreifen nach Anspruch 1 oder 2, **dadurch gekennzeichnet, dass** die Anzahl der Einschnitte (12), welche mit der Laufstreifenquerrichtung unterschiedlich große Winkel (α₁ bis α₆) einschließen, pro Profilblock (6) bis zu sieben beträgt.

4. Fahrzeugluftreifen nach einem der Ansprüche 1 bis 3, dessen Laufstreifen mit Spikes (9) versehen ist, wobei das mittlere Drittel der mit dem Untergrund in Kontakt kommenden Fläche des Laufstreifens frei von Spikes (9) ist und jenen Umfangsbereich aufweist, in welchem der Positivanteil am größten ist, **dadurch gekennzeichnet, dass** Profilblöcke (6), deren Einschnitte (12) mit der Laufstreifenquerrichtung unterschiedlich große Winkel (α₁ bis α₆) einschließen, im mittleren Drittel der mit dem Untergrund in Kontakt kommenden Fläche des Laufstreifens angeordnet sind.

5. Fahrzeugluftreifen nach einem der Ansprüche 1 bis 4, **dadurch gekennzeichnet, dass** Profilblöcke (6), deren Einschnitte (12) mit der Laufstreifenquerrichtung unterschiedlich große Winkel (α₁ bis α₆) einschließen, entlang des Reifenäquators (A-A) verlaufend angeordnet sind.

## Claims

1. Pneumatic vehicle tire, in particular for use in winter driving conditions, with a tread rubber, which is divided by channels (4), grooves (3, 14) and the like into tread bars (2, 5, 6), wherein tread bars (6) that are respectively provided with at least three sipes (12) are provided, said sipes extending substantially in the same direction and each running at an angle of at most 45° in relation to the transverse direction of the tread rubber, wherein the tread rubber has tread bars (6) of which the sipes (12) form angles (α₁ to α₆) of different sizes with the transverse direction of the tread rubber, said angles being progressively greater or smaller from sipe (12) to sipe (12), beginning with one of the two outermost sipes (12) in the circumferential direction of the tread bar (6), **characterized in that** the angles (α₁ to α₆) are greater or smaller from sipe (12) to sipe (12) by 1° to 1.5°.

2. Pneumatic vehicle tire according to Claim 1, **characterized in that** the greatest angle (α₁) is at most 30°, in particular at most 25°.

3. Pneumatic vehicle tire according to Claim 1 or 2, **characterized in that** the number of sipes (12) that form angles (α₁ to α₆) of different sizes with the transverse direction of the tread rubber is up to seven for each tread bar (6).

4. Pneumatic vehicle tire according to one of Claims 1 to 3, of which the tread rubber is provided with spikes (9), the middle third of the area of the tread rubber that comes into contact with the ground being free from spikes (9) and including that circumferential region in which the positive component is greatest, **characterized in that** tread bars (6) of which the sipes (12) form angles (α₁ to α₆) of different sizes with the transverse direction of the tread rubber are arranged in the middle third of the area of the tread rubber that comes into contact with the ground.

5. Pneumatic vehicle tire according to one of Claims 1 to 4, **characterized in that** tread bars (6) of which the sipes (12) form angles (α₁ to α₆) of different sizes with the transverse direction of the tread rubber are arranged running along the tire equator (A-A) .

## Revendications

1. Bandage pneumatique pour roue de véhicule, destiné en particulier à être utilisé dans des conditions hivernales de roulage et présentant une bande de roulement divisée en blocs profilés (2, 5, 6) par des sillons (4), des rainures (3, 14) et similaires, les blocs profilés (6) étant dotés d'au moins trois entailles (12) qui s'étendent essentiellement dans des directions correspondantes, chacune sous un angle d'au plus 45° par rapport à la direction transversale de la bande de roulement,
la bande de roulement présentant des blocs profilés (6) dont les entailles (12) forment avec la direction transversale de la bande de roulement des angles (α₁ à α₆) de valeurs différentes qui, partant d'une des deux entailles (12) extérieures dans la direction périphérique du bloc profilé (6) sont pas à pas plus grandes ou plus petites d'une entaille (12) à une autre entaille (12),
**caractérisé en ce que**
les angles (α₁ à α₆) augmentent ou diminuent de 1° à 1,5° d'une entaille (12) à une autre entaille (12).

2. Bandage pneumatique pour roue de véhicule selon la revendication 1, **caractérisé en ce que** le plus grand angle (α₁) est d'au plus 30° et en particulier d'au plus 25°.

3. Bandage pneumatique pour roue de véhicule selon les revendications 1 ou 2, **caractérisé en ce que** le nombre d'entailles (12) qui forment différents angles (α₁ à α₆) par rapport à la direction transversale de la bande de roulement est de jusque sept pour chaque bloc profilé (6).

4. Bandage pneumatique pour roue de véhicule selon l'une des revendications 1 à 3, dont la bande de roulement est dotée de clous (9), le tiers central de la surface de la bande de roulement entrant en contact avec le sol étant exempt de clous (9) et présentant une partie périphérique dans laquelle la partie positive est la plus grande, **caractérisé en ce que** les blocs profilés (6) dont les entailles (12) forment avec la direction transversale de la bande de roulement des angles (α₁ à α₆) de différentes valeurs sont disposés dans le tiers central de la surface de la bande de roulement qui entre en contact avec le sol.

5. Bandage pneumatique pour roue de véhicule selon l'une des revendications 1 à 4, **caractérisé en ce que** les blocs profilés (6) dont les entailles (12) forment avec la direction transversale de la bande de roulement des angles (α₁ à α₆) de différentes valeurs sont disposés le long de l'équateur (A-A) du bandage de roue.
